# EUROPÄISCHE PATENTSCHRIFT

(11) **EP 3 188 922 B1**
(45) Veröffentlichungstag und Bekanntmachung des Hinweises auf die Patenterteilung: **09.01.2019**
(21) Anmeldenummer: 15734070.4
(22) Anmeldetag: 01.07.2015
(51) Int. Cl.: B60K 37/06, G06F 3/01, G06F 3/03

(54) **BEDIENVORRICHTUNG UND VERFAHREN ZUM BEDIENEN VON FUNKTIONEN EINES FAHRZEUGS, INSBESONDERE EINES KRAFTWAGENS**
CONTROL DEVICE AND METHOD FOR CONTROLLING FUNCTIONS IN A VEHICLE, IN PARTICULAR A MOTOR VEHICLE
DISPOSITIF DE COMMANDE ET PROCÉDÉ PERMETTANT DE COMMANDER LES FONCTIONS D'UN VÉHICULE, EN PARTICULIER D'UN VÉHICULE À MOTEUR

(30) Priorität: 05.09.2014 DE 102014013763
(43) Veröffentlichungstag der Anmeldung: 12.07.2017
(73) Patentinhaber: Daimler AG, 70327 Stuttgart (DE)
(72) Erfinder: ENTENMANN, Volker, 71563 Affalterbach (DE)
(74) Vertreter: JENSEN & SON
(86) Internationale Anmeldenummer: PCT/EP2015/001325
(87) Internationale Veröffentlichungsnummer: WO 2016/034256

(56) Entgegenhaltungen:
- EP-A1- 2 323 019
- EP-A1- 2 741 171
- EP-A1- 2 930 603
- US-A1- 2013 076 615
- US-A1- 2013 154 298

## Beschreibung

Die Erfindung betrifft eine Bedienvorrichtung zum Bedienen von Funktionen eines Fahrzeugs gemäß dem Oberbegriff von Patentanspruch 1 sowie ein Verfahren zum Bedienen von Funktionen eines Fahrzeugs gemäß dem Oberbegriff von Patentanspruch 4.

Eine solche Bedienvorrichtung und ein solches Verfahren zum Bedienen von Funktionen eines Fahrzeugs, insbesondere eines Kraftwagens, wie beispielsweise eines Personenkraftwagens, sind bereits der DE 10 2012 000 263 A1 als bekannt zu entnehmen. Die Bedienvorrichtung umfasst dabei eine Gestenerfassungseinrichtung, mittels welcher von einer Person in einem Innenraum des Fahrzeugs ausgeführte Gesten zum Bedienen der Funktionen erfassbar sind. Im Rahmen des Verfahrens werden somit im dreidimensionalen Raum ausgeführte Gesten genutzt, um die Funktionen zu bedienen.

Bei einem ersten Schritt des Verfahrens wird bestimmt, ob eine im dreidimensionalen Raum durchgeführte erste Geste mittels eines Bild-basierten Erfassungsvorgangs erfasst wird oder nicht. Bei einem zweiten Schritt wird bestimmt, ob die erste Geste eine einem Aktivieren eines Steuerns einer Funktion zugeordnete Geste ist oder nicht, falls bestimmt wird, dass die erste Geste erfasst worden ist. Bei einem dritten Schritt wird das Steuern der Funktion aktiviert, falls bestimmt wird, dass die erfasste erste Geste die dem Aktivieren des Steuerns der Funktion zugeordnete Geste ist. Bei einem vierten Schritt wird bestimmt, ob eine im dreidimensionalen Raum durchgeführte zweite Geste mittels des Bild-basierten Erfassungsvorgangs erfasst wird oder nicht. Bei einem fünften Schritt wird bestimmt, ob die erfasste zweite Geste eine dem Steuern der Funktion zugeordnete Geste oder nicht, falls bestimmt wird, dass die zweite Geste erfasst worden ist. Schließlich wird bei einem sechsten Schritt die Funktion gesteuert, falls bestimmt worden ist, dass die erfasste erste Geste die dem Aktivieren des Steuerns der Funktion zugeordnete Geste ist, und falls bestimmt wird, dass die erfasste zweite Geste die dem Steuern der Funktion zugeordnete Geste ist.

Aus der US2013/154298 A1 ist weiter eine Bedienvorrichtung mit verschiedenen Bedienzonen bekannt, wobei mit innerhalb einer der Bedienzonen ausgeführten Geste eine Fahrzeugfunktion steuerbar ist.

Die EP 2 323 019 A1 offenbart eine Vorrichtung mit einem Display, das verschiedene Bereiche mit zugeordneten Informationen aufweist. In einem ersten Schritt wird überprüft, ob ein Bereich des Displays berührt_worden ist. In einem weiteren Schritt wird überprüft, ob der Finger von dem Bereich abgehoben wird. Ist der Finger abgehoben worden, wird nach Ausführung einer vorbestimmten Geste eine dieser zugeordneten Funktion ausgeführt.

Aus der EP 2 930 603 A1 ist eine Vorrichtung zur Erfassung von Gesten in einem Erfassungsraum zur Steuerung einer Anzeige auf einer Anzeigefläche bekannt.

Aus der EP2 741 171 A1 ist eine Vorrichtung eines Hubschraubers zur Steuerung von auf einem Bildschirm angezeigten Funktionen mittels Zeigegesten bekannt, wobei die Gesten in einem "Motion Box" genannten Gestenerfassungsbereich ausführbar sind.

Aus der gattungsbildenden US 2013/076615 A1 ist eine Bedienvorrichtung mit verschiedenen Bedienzonen bekannt, wobei die Bedienzonen mittels einer Zeigegeste ausgewählt werden können. Eine Kamera ist zur Überwachung von Gesten in einem an einem Lenkrad angeordneten begrenzten Erfassungsbereich vorgesehen. Ein am Lenkrad angeordneter Knopf oder ist zum Starten oder Beenden einer Eingabe mittels Gesten vorgesehen.

Aufgabe der vorliegenden Erfindung ist es, eine Bedienvorrichtung und ein Verfahren der eingangs genannten Art zu schaffen, mittels welchen sich eine besonders ergonomische und komfortable Bedienung der Funktionen realisieren lässt.

Diese Aufgabe wird durch eine Bedienvorrichtung mit den Merkmalen des Patentanspruchs 1 sowie durch ein Verfahren mit den Merkmalen des Patentanspruchs 4 gelöst. Vorteilhafte Ausgestaltungen mit zweckmäßigen Weiterbildungen der Erfindung sind in den übrigen Ansprüchen angegeben.

Um eine Bedienvorrichtung der im Oberbegriff des Patentanspruchs 1 angegebenen Art zu schaffen, mittels welcher eine besonders ergonomische und komfortable Bedienung der Funktionen realisierbar ist, ist es erfindungsgemäß vorgesehen, dass die Gestenerfassungseinrichtung eine Mehrzahl von Bedienzonen in dem Innenraum aufweist, welche jeweils einer der Funktionen zugeordnet und zum Bedienen der jeweiligen Funktion mittels einer der jeweiligen Bedienzone zugeordneten Geste auswählbar sind. Hierdurch ist es möglich, ein universelles Gestenbedienkonzept zu realisieren, durch welches sich unterschiedliche Funktionen von beliebigen Orten und damit auch vom gleichen Ort im Innenraum aus bedienen lassen. Hierzu wird beispielsweise zum Bedienen einer der Funktionen die dieser einen Funktion zugeordnete Bedienzone ausgewählt, indem die dieser Bedienzone zugeordnete Geste von der Person im Innenraum ausgeführt wird. Nach Auswählen der Bedienzone kann schließlich die der ausgewählten Bedienzone zugeordnete Funktion bedient werden.

Dabei ist es möglich, die jeweilige Bedienzone von unterschiedlichen Orten des Innenraums aus auszuwählen, sodass die Person die jeweilige Funktion auf besonders einfache und komfortable Weise bedienen kann. Die erfindungsgemäße Bedienvorrichtung ermöglicht somit ein universelles Gestenbedienkonzept für zahlreiche Fahrzeugfunktionen und ist beliebig erweiterbar, sodass auch eine besonders hohe Anzahl an Funktionen auf einfache Weise bedient werden kann, ohne dass hierzu eine entsprechende Vielzahl an Bedienelementen wie beispielsweise Knöpfen und/oder Schaltern im Innenraum vorgesehen werden müsste.

Zum Erfassen der jeweiligen Gesten und somit zum Erfassen, welche der Bedienzonen ausgewählt wird, umfasst die Gestenerfassungseinrichtung beispielsweise wenigstens eine oder mehrere Kameras, welche beispielsweise als 3D-Kameras ausgebildet sind. Bei einer solchen 3D-Kamera kann es sich um eine Stereo-Kamera oder eine Time-of-Flight-Kamera handeln. Die jeweilige 3D-Kamera ist dazu ausgebildet, zumindest ein Teil des Innenraums und somit zumindest ein Teil der Person im Innenraum dreidimensional zu erfassen. Durch eine entsprechende Bildverarbeitung können dann beispielsweise Kopf-, Arm-, Hand- und/oder Fingerbewegungen und/oder -haltungen der Personen ermittelt und beispielsweise Schnittpunkte mit den Bedienzonen berechnet werden, sodass schließlich die jeweilige Geste erfasst werden kann.

Eine Aktivierung der jeweiligen Bedienzone erfolgt, wenn die Person bei der jeweiligen Geste mit einem Finger, insbesondere dem Zeigefinger, einer Hand der Person auf die jeweilige Bedienzone zeigt. Mit anderen Worten ist es vorzugsweise vorgesehen, dass die jeweilige Bedienzone derart ausgewählt d.h. aktiviert werden kann, dass die Person mit einem ihrer Finger, insbesondere ihrem Zeigefinger, auf die jeweilige Bedienzone, die die Person auszuwählen wünscht, zeigt. Dadurch kann die jeweilige Bedienzone durch eine besonders einfache und natürliche Geste ausgewählt werden.

Unter dem Auswählen der jeweiligen Bedienzone ist ein Aktivieren der jeweiligen Bedienzone zu verstehen. Infolge des Auswählens, das heißt des Aktivierens der jeweiligen Bedienzone, kann die der ausgewählten beziehungsweise aktivierten Bedienzone zugeordnete Funktion schließlich bedient werden.

Dabei ist vorgesehen, dass die der ausgewählten Bedienzone zugeordnete Funktion durch Bewegen der Hand und/oder wenigstens eines Fingers der Hand bei in dem vorgebbaren Bereich verbleibendem Handgelenk bedienbar ist. Durch das notwendige Verharren des Handgelenks während der eigentlichen Bedienung der Funktion, das heißt während der eigentlichen Funktionssteuerung, entstehen automatisch Mikrogesten zum Bedienen der Funktion, wobei diese Mikrogesten ergonomisch effizient und somit besonders komfortabel sind.

Als besonders vorteilhaft hat es sich dabei gezeigt, wenn die jeweils ausgewählte Bedienzone so lange ausgewählt bleibt, wie das Handgelenk der Hand nach dem Ausführen der Geste in einem vorgebbaren Bereich verbleibt. Somit kann die Person die ausgewählte Funktion so lange bedienen, wie die Bedienzone ausgewählt ist.

Eine weitere Ausführungsform zeichnet sich dadurch aus, dass die ausgewählte Bedienzone durch Bewegen des Handgelenks aus dem Bereich deaktivierbar ist. Hierdurch kann die zunächst ausgewählte, das heißt aktivierte Bedienzone deaktiviert werden, sodass die entsprechende Funktion nicht mehr bedient werden kann. In der Folge kann beispielsweise eine andere Bedienzone aktiviert beziehungsweise ausgewählt werden, um die der anderen Bedienzone zugeordnete Funktion schließlich zu bedienen.

Der Erfindung liegt die Erkenntnis zugrunde, dass die Bedienung von Funktionen durch eine Person, insbesondere den Fahrer des Fahrzeugs, während des autonomen Fahrens eine neue Herausforderung darstellt, da der Fahrer während des autonomen Fahrens entspannt in seinem Sitz sitzen kann und eine Lenkhandhabe wie beispielsweise ein Lenkrad des Fahrzeugs nicht mit seinen Händen berühren beziehungsweise halten muss. Das Lenkrad bewegt sich dabei entweder autonom und/oder wird weggefahren, das heißt von dem Fahrer entfernt, sodass der Fahrer das Lenkrad nicht mehr halten kann. Somit sind am Lenkrad vorgesehene Bedienelemente für den Fahrer nicht mehr verfügbar beziehungsweise erreichbar, sodass der Fahrer die Funktionen des Fahrzeugs nicht mehr über die am Lenkrad vorgesehenen Bedienelemente bedienen kann.

Dabei ist es wünschenswert, für den Fahrer eine Möglichkeit bereitzustellen, die Funktionen des Fahrzeugs auf einfache und komfortable sowie ergonomische Weise zu bedienen und hierbei beispielsweise Menüsysteme auf einem Kombiinstrument, einem Head-Up-Display und/oder einem Zentraldisplay komfortabel bedienen zu können. Derselbe Wunsch besteht natürlich auch hinsichtlich der Bedienung weiterer Fahrzeugfunktionen. Dieser Wunsch kann mittels der erfindungsgemäßen Bedienvorrichtung erfüllt werden, da der Fahrer die am Lenkrad vorgesehenen Bedienelemente nicht benötigt, um die Funktionen zu bedienen. Der Fahrer kann nämlich auf die beschriebene Weise ergonomisch und komfortabel die jeweiligen Funktionen bedienen, indem er die Gesten, insbesondere dreidimensionale Gesten, ausführt. Hierbei sind die Gesten vorzugsweise als Körpergesten ausgebildet, die der Fahrer mit seinem Körper ausführen kann.

Zur Erfindung gehört auch ein Verfahren der im Oberbegriff des Patentanspruchs 4 angegebenen Art, wobei es zur Realisierung einer besonders ergonomischen und komfortablen Bedienung der Funktionen erfindungsgemäß vorgesehen ist, dass die Gestenerfassungseinrichtung eine Mehrzahl von Bedienzonen im Innenraum aufweist, welche jeweils einer der Funktionen zugeordnet sind und zum Bedienen der jeweiligen Funktion mittels einer der jeweiligen Bedienzone zugeordneten Geste ausgewählt, das heißt aktiviert werden. Vorteilhafte Ausgestaltungen der erfindungsgemäßen Bedienvorrichtung sind als vorteilhafte Ausgestaltungen des erfindungsgemäßen Verfahrens anzusehen und umgekehrt.

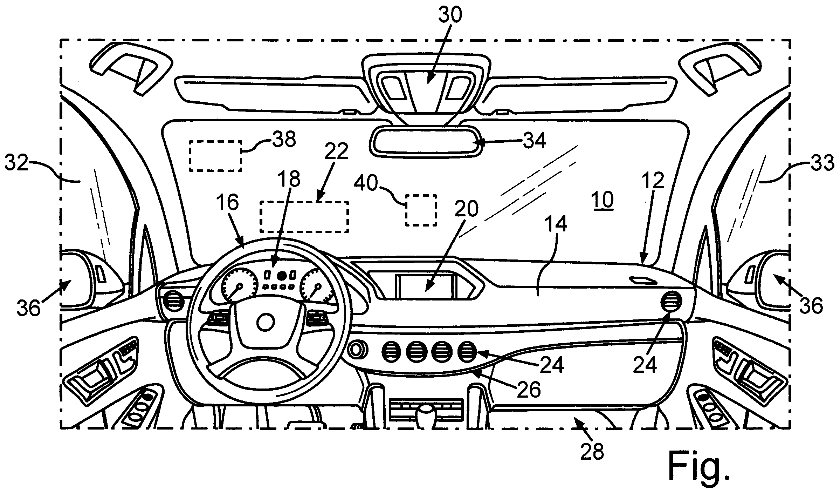

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Fig. ausschnittsweise eine schematische Darstellung eines in einem Innenraum eines Fahrzeugs angeordneten Cockpits, mit einer Bedienvorrichtung zum Bedienen von Funktionen des Fahrzeugs, wobei die Bedienvorrichtung eine Gestenerfassungseinrichtung umfasst, mittels welcher von einer Person in dem Innenraum ausgeführte Gesten zum Bedienen der Funktionen erfassbar sind.

Die Fig. zeigt in einer schematischen Darstellung ausschnittsweise einen im Ganzen mit 10 bezeichneten Innenraum eines Fahrzeugs, welches als Kraftwagen in Form eines Personenkraftwagens ausgebildet ist. In dem Innenraum 10 ist ein im Ganzen mit 12 bezeichnetes Cockpit angeordnet, welches eine Instrumententafel 14 sowie eine Lenkhandhabe in Form eines Lenkrads 16 umfasst. Eine sich im Innenraum 10 aufhaltende Person, insbesondere der Fahrer des Personenkraftwagens, kann den Personenkraftwagen über das Lenkrad 16 steuern. Ferner ist es möglich, dass der Personenkraftwagen eine autonome Fahrfunktion aufweist, in deren Rahmen der Personenkraftwagen autonom beziehungsweise automatisch ohne ein Zutun des Fahrers gefahren wird.

Im Innenraum 10 ist eine Vielzahl von Komponenten des Personenkraftwagens angeordnet, die jeweils wenigstens eine Funktion erfüllen und somit ausführen können. Bei einer dieser Komponenten handelt es sich beispielsweise um ein Kombiinstrument 18, welches zumindest ein Anzeigeelement umfasst. Die Funktion des Kombiinstruments 18 ist es, Werte, die den aktuellen Fahrzustand des Personenkraftwagens charakterisieren, anzuzeigen. Bei diesen Werten handelt es sich beispielsweise um die aktuelle Fahrgeschwindigkeit oder die Drehzahl eines Antriebsaggregats zum Antreiben des Personenkraftwagens. Eine weitere der Komponenten ist ein Zentraldisplay 20, welches beispielsweise die Funktion aufweist, weitere Informationen wie beispielsweise eine Karte einer Umgebung des Personenkraftwagens anzuzeigen. Ferner umfasst der Personenkraftwagen als weitere Komponenten ein Head-Up-Display 22, Luftausströmdüsen 24, ein Klimabediengerät 26, ein Handschuhfach 28, eine Dachbedieneinheit 30, Seitenscheiben 32, 33, einen Innenspiegel 34 sowie Außenspiegel 36.

Alle diese Komponenten weisen wenigstens eine Funktion auf, wobei diese Funktionen vom Fahrer bedient, das heißt beispielsweise aktiviert und deaktiviert werden können. Im Rahmen der Bedienung der Funktion des Zentraldisplays 20 kann das Zentraldisplay 20 beispielsweise aktiviert oder deaktiviert werden. Im Rahmen der Bedienung der Funktion des Klimabediengeräts 26 kann der Fahrer beispielsweise eine Temperatur von Luft, die aus den Luftausströmdüsen 24 in den Innenraum 10 ausströmt, einstellen. Alternativ oder zusätzlich ist es im Rahmen der Bedienung der Funktion des Klimabediengeräts 26 möglich, eine Gebläsestärke und somit den Volumenstrom der aus den Luftausströmdüsen 24 ausströmenden Luft einzustellen. Im Rahmen der Bedienung der Funktion der Seitenscheiben 32, 33 ist es beispielsweise möglich, die Seitenscheiben 32, 33 in Fahrzeughochrichtung zu verfahren und somit zu öffnen oder zu schließen.

Insgesamt ist aus der Fig. erkennbar, dass der Personenkraftwagen eine Vielzahl von Komponenten und somit eine Vielzahl von Funktionen aufweist, welche vom Fahrer bedient werden können. Um eine besonders ergonomische und komfortable Bedienung der Funktionen zu realisieren, ist eine in der Fig. nicht erkennbare Bedienvorrichtung zum Bedienen der Funktionen vorgesehen. Die Bedienvorrichtung umfasst eine Gestenerfassungseinrichtung, mittels welcher von einer Person, insbesondere dem Fahrer, in dem Innenraum 10 ausgeführte Gesten zum Bedienen der Funktionen erfassbar sind. Hierzu weist die Gestenerfassungseinrichtung beispielsweise eine Kamera, insbesondere eine 3D-Kamera, auf, mittels welcher zumindest ein Teil des Innenraums 10 und der Fahrer erfasst werden. Jeweilige, von der Kamera erfasste Bilder werden einem Bildverarbeitungsverfahren unterzogen, mittels welchem die jeweiligen Gesten erfasst werden.

Die Gestenerfassungseinrichtung weist nun eine Mehrzahl von Bedienzonen in dem Innenraum 10 auf, welche jeweils einer der Funktionen zugeordnet und zum Bedienen der jeweiligen Funktion mittels einer der jeweiligen Bedienzone zugeordneten Geste auswählbar sind. Vorliegend sind in der Fig. zwei mit 38 beziehungsweise 40 bezeichnete der Bedienzonen gezeigt. Selbstverständlich können mehr als zwei Bedienzonen vorgesehen sein. Beispielsweise ist die Bedienzone 38 der Funktion der Seitenscheibe 32 zugeordnet, wobei die Bedienzone 40 der Funktion des Zentraldisplays 20 zugeordnet ist. Wünscht der Fahrer beispielsweise, das Zentraldisplay 20 beziehungsweise dessen Funktion zu bedienen und dabei beispielsweise das Zentraldisplay 20 zu aktivieren oder zu deaktivieren, so wählt der Fahrer die Bedienzone 40 aus. Infolge des Auswählens der Bedienzone 40 kann der Fahrer dann das Zentraldisplay 20 beziehungsweise dessen Funktion bedienen, wobei der Fahrer beispielsweise das Zentraldisplay 20 aktivieren oder deaktivieren kann.

Wünscht der Fahrer beispielsweise, die Seitenscheibe 32 beziehungsweise deren Funktion zu bedienen, so wählt der Fahrer die Bedienzone 38 aus. Infolge des Auswählens der Bedienzone 38 kann der Fahrer dann die Seitenscheibe 32 beziehungsweise deren Funktion bedienen, wobei der Fahrer beispielsweise die Seitenscheibe 32 öffnen oder schließen kann.

Zur Realisierung der Bedienung der jeweiligen Funktion ist dabei ein sogenanntes Point-and-Control-Bedienkonzept vorgesehen. Jede der Bedienzonen 38 und 40 kann derart durch den Fahrer ausgewählt werden, dass der Fahrer mittels einem seiner Zeigefinger auf die auszuwählende Bedienzone 38 beziehungsweise 40 zeigt. Zeigt der Fahrer beispielsweise mit einem seiner Zeigefinger auf die Bedienzone 40, so wird die Bedienzone 40 ausgewählt, das heißt aktiviert. Zeigt der Fahrer jedoch mit einem seiner Zeigefinger auf die Bedienzone 38, so wird die Bedienzone 38 ausgewählt, das heißt aktiviert. Hierbei ist es vorgesehen, dass die jeweilige Bedienzone 38 und 40 ausgewählt wird, wenn der Fahrer mit seinem Zeigefinger auf die jeweilige Bedienzone 38 beziehungsweise 40 zeigt und für eine vorgebbare, kurze Zeitdauer in dieser Position verharrt.

Das Aktivieren beziehungsweise Auswählen der jeweiligen Bedienzone 38 beziehungsweise 40 wird vorzugsweise optisch und/oder akustisch zurückgemeldet, sodass dem Fahrer deutlich kommuniziert werden kann, ob die gewünschte Bedienzone 38 beziehungsweise 40 ausgewählt wurde. Die ausgewählte Bedienzone 38 beziehungsweise 40 bleibt so lange aktiviert, wie sich die Position eines Handgelenks nicht signifikant verändert. Mit anderen Worten muss der Fahrer zum Auswählen der jeweiligen Bedienzone 38 beziehungsweise 40 auf die entsprechende Bedienzone 38 beziehungsweise 40 zeigen, wozu er seine Hand und somit sein Handgelenk in eine entsprechende Position bewegt und in dieser Position verharrt. Die ausgewählte Bedienzone 38 beziehungsweise 40 bleibt so lange ausgewählt, wie das Handgelenk der Hand in einem vorgebbaren Bereich verbleibt. Eine deutliche Positionsveränderung des Handgelenks führt zum Deaktivieren der zunächst ausgewählten Bedienzone 38 oder 40. Mit anderen Worten, bewegt der Fahrer seine Hand aus dem vorgebbaren Bereich, so wird die zuvor ausgewählte Bedienzone 38 beziehungsweise 40 deaktiviert. Dieses Auswählen der jeweiligen Bedienzone 38 und 40 ist ein sogenannter Point-Schritt im Rahmen des Point-and-Control-Bedienkonzepts.

An den Point-Schritt schließt sich ein Control-Schritt an, in dessen Rahmen die Funktion schließlich bedient, das heißt gesteuert wird. Eine aktivierte, das heißt ausgewählte Bedienzone kann durch Fingerbewegungen und/oder Handbewegungen aus dem Handgelenk heraus beispielsweise in Fahrzeughochrichtung nach oben und unten sowie in Fahrzeugquerrichtung nach links und rechts bedient werden. Voraussetzung hierzu ist, dass die Position des Handgelenks nahezu gleich bleibt, das heißt dass das Handgelenk in dem vorgebbaren Bereich verbleibt.

Die erste Finger- und/oder Handbewegung aus einer Ruhelage nach dem Aktivieren der jeweiligen Bedienzone 38 beziehungsweise 40 legt eine Bedienrichtung fest, die bis zum Erreichen einer weiteren Ruhelage verriegelt beziehungsweise festgelegt bleibt und dann, das heißt beim Erreichen der weiteren Ruhelage, wieder freigegeben wird. Hierdurch ist eine Vier-Wege-Bedienung darstellbar, welche vorzugsweise durch eine Bestätigungs-Geste beziehungsweise OK-Geste sowie um eine Abbrechen-Geste beziehungsweise Zurück-Geste erweitert wird, um die gewünschte Bedienung zu bestätigen beziehungsweise abzubrechen oder zu verlassen.

Das genannte Point-and-Control-Bedienkonzept stellt ein universelles Gestenbedienkonzept für zahlreiche Funktionen des Personenkraftwagens dar, welches beliebig erweiterbar ist. Das Auswählen beziehungsweise Aktivieren der jeweiligen Bedienzone 38 beziehungsweise 40 durch Zeigen mit dem Zeigefinger ist eine natürliche Geste, welche einfach, ergonomisch und komfortabel ausführbar ist. Durch das erforderliche Verharren des Handgelenks während der eigentlichen Steuerung beziehungsweise Bedienung der Funktion entstehen automatisch Mikrogesten, die ergonomisch effizient und somit komfortabel sind.

## Patentansprüche

1. Bedienvorrichtung zum Bedienen von Funktionen eines Fahrzeugs, mit einer Gestenerfassungseinrichtung, mittels welcher von einer Person in einem Innenraum(10) des Fahrzeugs ausgeführte Gesten zum Bedienen der Funktionen erfassbar sind, wobei die Gestenerfassungseinrichtung eine Mehrzahl von Bedienzonen (38, 40) in dem Innenraum (10) aufweist, welche jeweils einer der Funktionen zugeordnet und zum Bedienen der jeweiligen Funktion mittels einer der jeweiligen Bedienzone (38, 40) zugeordneten Geste aktivierbar sind,
wobei eine jeweilige Bedienzone (38,40) durch eine mit einem Finger, insbesondere dem Zeigefinger, einer Hand ausgeführten Zeigegeste aktivierbar ist,
**dadurch gekennzeichnet, dass**
die der aktivierten Bedienzone (38, 40) zugeordnete Funktion durch eine Finger- und/oder Handbewegung steuerbar ist, solange ein Handgelenk der Hand in einem vorgebbaren, vom Gestenerfassungsbereich verschiedenen Bereich verbleibt.

2. Bedienvorrichtung nach Anspruch 1,
**dadurch gekennzeichnet, dass**
die jeweils ausgewählte Bedienzone (38, 40) so lange aktiviert bleibt, wie das Handgelenk der Hand nach dem Ausführen der Zeigegeste in dem vorgebbaren Bereich verbleibt.

3. Bedienvorrichtung nach Anspruch 2,
**dadurch gekennzeichnet, dass**
die ausgewählte Bedienzone (38, 40) durch Bewegen des Handgelenks aus dem vorgebbaren Bereich deaktivierbar ist.

4. Verfahren zum Bedienen von Funktionen eines Fahrzeugs, bei welchem mittels einer Gestenerfassungseinrichtung von einer Person in einem Innenraum (10) des Fahrzeugs ausgeführte Gesten zum Bedienen der Funktionen erfasst werden, **dadurch gekennzeichnet, dass**
die Gestenerfassungseinrichtung eine Mehrzahl von Bedienzonen (38, 40) in dem Innenraum (10) aufweist, welche jeweils einer der Funktionen zugeordnet sind und zum Bedienen der jeweiligen Funktion mittels einer der jeweiligen Bedienzone (38, 40) zugeordneten Geste aktiviert werden, wobei
zum Aktivieren der jeweiligen Bedienzone (38, 40) mit einem Finger, insbesondere dem Zeigefinger, einer Hand der Person auf die jeweilige Bedienzone (38, 40) gezeigt wird
**dadurch gekennzeichnet, dass** die der aktivierten Bedienzone (38, 40) zugeordnete Funktion durch eine Finger- und/oder Handbewegung steuerbar ist, solange ein Handgelenk der Hand in einem vorgebbaren, vom Gestenerfassungsbereich verschiedenen Bereich verbleibt.

## Claims

1. Control device for controlling functions of a vehicle, comprising a gesture detection device by means of which gestures of a person in the interior (10) of the vehicle can be detected for controlling the functions, wherein the gesture detection device has a plurality of control zones (38, 40) in the interior (10), each of which is assigned to one of the functions and can be activated to control the respective function by means of a gesture assigned to the respective control zone (38, 40), wherein a respective control zone (38, 40) can be activated by a pointing gesture performed with a finger, in particular the index finger, of a hand,
**characterised in that**
the function assigned to the activated control zone (38, 40) can be controlled by a finger and/or hand movement as long as a wrist of the hand remains in a presettable region which is different from the gesture detection region.

2. Control device according to claim 1,
**characterised in that**
the respectively selected control zone (38, 40) remains activated as long as the wrist of the hand remains in the presettable region after performing the pointing gesture.

3. Control device according to claim 2,
**characterised in that**
the selected control zone (38, 40) can be deactivated by moving the wrist out of the presettable region.

4. Method for controlling functions of a vehicle, wherein gestures performed by a person in an interior (10) of the vehicle are detected by a gesture detection device,
**characterised in that**
the gesture detection device has a plurality of control zones (38, 40) in the interior (10), each of which is assigned to one of the functions and is activated to control the respective function by means of a gesture assigned to the respective control zone (38, 40), wherein,
in order to activate the respective control zone (38, 40), a finger, in particular the index finger, of a hand of the person is pointed to the respective control zone (38, 40),
**characterised in that**
the function assigned to the activated control zone (38, 40) is controllable by a finger and/or hand movement as long as a wrist of the hand remains in a presettable region which is different from the gesture detection region.

## Revendications

1. Dispositif de commande de fonctions d'un véhicule automobile, comprenant un dispositif de détection de gestes, au moyen duquel peuvent être détectés des gestes réalisés par une personne se trouvant dans l'habitacle (10) du véhicule automobile pour commander les fonctions, le dispositif de détection de geste présentant une pluralité de zones de commande (38, 40) dans l'habitacle (10), qui respectivement sont associées à l'une des fonctions et peuvent être activées pour commander la fonction respective au moyen d'un geste associé à la zone de commande respective (38, 40), une zone de commande respective (38, 40) pouvant être activée par un geste d'indication réalisé par un doigt, en particulier par l'index, d'une main, **caractérisé en ce que** la fonction associée à la zone de commande (38, 40) activée peut être commandée par un mouvement de la main et/ou d'un doigt, tant que le poignet de la main demeure dans une zone prédéfinie différente de la zone de détection de geste.

2. Dispositif de commande selon la revendication 1, **caractérisé en ce que** la zone de commande (38, 40) respectivement sélectionnée reste active tant que le poignet de la main demeure dans la zone prédéfinie après la réalisation du geste d'indication dans la zone prédéfinie.

3. Dispositif de commande selon la revendication 2, **caractérisé en ce que** la zone de commande sélectionnée (38, 4à) peut être désactivée par un mouvement du poignet de la main en dehors de la zone prédéfinie.

4. Procédé de commande des fonctions d'un véhicule automobile, au moyen d'un dispositif de détection de gestes étant réalisés des gestes par une personne se trouvant dans un habitacle (10) du véhicule automobile pour commander les fonctions, **caractérisé en ce que** le dispositif de détection de gestes présente une pluralité de zones de commande (38, 40) dans l'habitacle, qui sont associées à chacune des fonctions et qui sont activées pour commander la fonction respective au moyen d'un geste associé à la zone de commande respective (38, 40), pour activer la zone de commande respective (38, 40) à l'aide de son doigt, en particulier son index, la personne indique la zone de commande respective (38, 40), **caractérisé en ce que** la fonction associée à la zone de commande activée (38, 40) peut être commandée par un mouvement de doigt et/ou de main, tant qu'un poignet de la main demeure dans une zone prédéfinie différente de la zone de détection de gestes.
